(19) Europäisches Patentamt
European Patent Office
Office européen des brevets

(11) **EP 2 430 492 B1**

(12) **FASCICULE DE BREVET EUROPEEN**

(45) Date de publication et mention de la délivrance du brevet:
**16.11.2016 Bulletin 2016/46**

(21) Numéro de dépôt: **10717195.1**

(22) Date de dépôt: **19.04.2010**

(51) Int Cl.:
**G02C 13/00** *(2006.01)*      **B29D 11/00** *(2006.01)*

(86) Numéro de dépôt international:
**PCT/FR2010/000318**

(87) Numéro de publication internationale:
**WO 2010/130885 (18.11.2010 Gazette 2010/46)**

(54) **PRODUIT COMPORTANT UNE LENTILLE OPHTALMIQUE SOUPLE, ET PROCÉDÉ DE MONTAGE D'UNE TELLE LENTILLE OPHTALMIQUE SOUPLE SUR UN VERRE DE LUNETTES**

**PRODUKT MIT FLEXIBLER LINSE UND PROZESS UM EINE SOLCHE FLEXIBLE LINSE AUF EIN BRILLENGLAS ZU MONTIEREN**

**PRODUCT WITH A FLEXIBLE OPHTHALMIC LENS AND PROCESS TO BRING IT ONTO A SPECTACLE LENS**

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **11.05.2009 FR 0902253**

(43) Date de publication de la demande:
**21.03.2012 Bulletin 2012/12**

(73) Titulaire: **Essilor International (Compagnie Générale d'Optique) 94220 Charenton-le-Pont (FR)**

(72) Inventeur: **ROUAULT DE COLIGNY, Pierre F-94220 Charenton Le Pont (FR)**

(74) Mandataire: **Chauvin, Vincent et al Cabinet Harle et Phelip 14/16 rue Ballu 75009 Paris (FR)**

(56) Documents cités:
| | |
|---|---|
| EP-A1- 1 684 097 | EP-A1- 1 895 341 |
| EP-A1- 2 025 461 | WO-A1-03/025659 |
| WO-A1-2007/141402 | WO-A1-2008/015210 |
| US-A- 4 166 088 | US-A- 4 883 548 |
| US-A1- 2005 105 043 | US-B1- 7 036 929 |

**Description**

DOMAINE TECHNIQUE AUQUEL SE RAPPORTE L'INVENTION

La présente invention concerne de manière générale les lentilles ophtalmiques souples à fixer sur des verres de lunettes. Elle concerne plus particulièrement un produit à usage optique comportant une telle lentille ophtalmique souple et un élément de conditionnement de cette lentille ophtalmique souple. Elle concerne également un procédé de montage de la lentille ophtalmique souple sur un verre de lunettes.

ARRIÈRE-PLAN TECHNOLOGIQUE

On connaît des documents US 7 036 929, US 3 628 854 et FR 2924819 une lentille ophtalmique souple de faible épaisseur, adaptée à être collée sur un verre d'une paire de lunettes. Cette lentille souple permet de modifier à peu de frais les caractéristiques optiques de la paire de lunettes, en ajoutant au verre de lunettes une correction optique supplémentaire, par exemple parce que l'acuité visuelle du porteur a baissé. Cette lentille souple est donc généralement mise en place sur le verre de lunettes alors que celui-ci a déjà été usiné et assemblé avec la paire de lunettes. Il convient donc au préalable de la découper pour ramener son contour à la forme souhaitée, c'est-à-dire à la forme du verre de lunettes.

La difficulté est que l'utilisation d'une meuleuse de verres de lunettes pour usiner cette lentille souple n'est pas possible du fait de la trop grande souplesse de cette lentille. Si on bloquait cette lentille souple dans une meuleuse, la meule ferait en effet plier la lentille souple plutôt qu'elle ne l'usinerait.

La solution pour ramener la lentille souple à la forme du verre de lunettes consiste donc actuellement à découper la lentille souple à l'aide d'une paire de ciseaux ou d'un cutter. La précision d'une telle méthode est, on le comprend, approximative et dépend en grande partie de l'habileté de l'opticien.

Cette solution n'est par ailleurs pas viable pour les lentilles souples présentant des puissances optiques cylindriques et/ou prismatiques. De telles lentilles doivent en effet être précisément orientées angulairement par rapport aux verres de lunettes pour correctement remplir les fonctions optiques pour lesquelles elles ont été conçues, ce qui n'est pas réalisable manuellement, sauf à obtenir une précision très réduite et donc un piètre confort optique.

On connaît par ailleurs du document WO 2008/015210 un procédé de transfert d'une couche polymérisable reposant sur un support en polycarbonate vers une face optique d'une lentille ophtalmique. Toutefois, à aucun stade donné du procédé divulgué dans ce document, le produit ne comporte deux couches scindables manuellement dont une couche souple.

OBJET DE L'INVENTION

Le but de la présente invention est donc de faciliter et d'optimiser la mise en forme de la lentille souple en vue de son montage sur un verre de lunettes.
A cet effet, on propose selon l'invention un produit à usage optique tel que défini dans la revendication 1.
Grâce à l'invention, l'ensemble du produit peut être bloqué dans un appareil de détourage de verres de lunettes classique, puis usiné suivant un procédé de détourage classique, sans qu'il ne soit nécessaire de modifier de quelque manière que ce soit l'architecture ou la partie logicielle de cet appareil de détourage. La précision d'un tel appareil de détourage permet donc de précisément découper le produit, et donc la lentille souple, à la forme souhaitée. La lentille souple peut ainsi ensuite être extraite de la couche de conditionnement avant d'être appliquée sur un verre de lunettes.
Par ailleurs, les première et seconde couche de conditionnement étant prévues pour être mises au rebut après usinage, il est possible de graver ou d'imprimer sur l'une des faces de l'une de ces couches de conditionnement des marques de centrage.
De telles marques de centrage, homologues de celles que l'on trouve sur un verre de lunettes à usiner, sont difficiles à graver ou à imprimer sur une lentille souple. Elles permettent pourtant de précisément centrer cette lentille souple.
Grâce à l'invention, les marques de centrage sont aisément marquées sur la première couche de conditionnement. Elles permettent ainsi de repérer le référentiel optique de la lentille souple afin de prévoir comment détourer le produit pour qu'une fois la lentille fixée sur le verre de lunettes, elle soit convenablement centrée en regard de la pupille de l'oeil du porteur de manière à ce qu'elle exerce convenablement la fonction optique pour laquelle elle a été conçue.
D'autres caractéristiques avantageuses et non limitatives du produit selon l'invention sont définies dans les revendications 2 à 12.
L'invention concerne aussi un procédé de montage de la couche optique d'un tel produit sur un verre de lunettes cible, tel que défini dans les revendications 13 et 14.

DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.
Sur les dessins annexés :

- la figure 1 est une vue schématique en perspective d'un produit à usage optique selon l'invention ;
- la figure 2 est une vue schématique en perspective du produit à usage optique de la figure 1, équipé d'un film de protection ;

- la figure 3 est une vue en coupe selon le plan A-A de la figure 1 ;
- la figure 4 est une vue générale en perspective d'un dispositif centreur-bloqueur ;
- la figure 5 est un schéma optique du dispositif de la figure 4 ;
- la figure 6 est une vue schématique d'un appareil de détourage ;
- la figure 7 est une vue schématique en perspective d'une paire de lunettes.

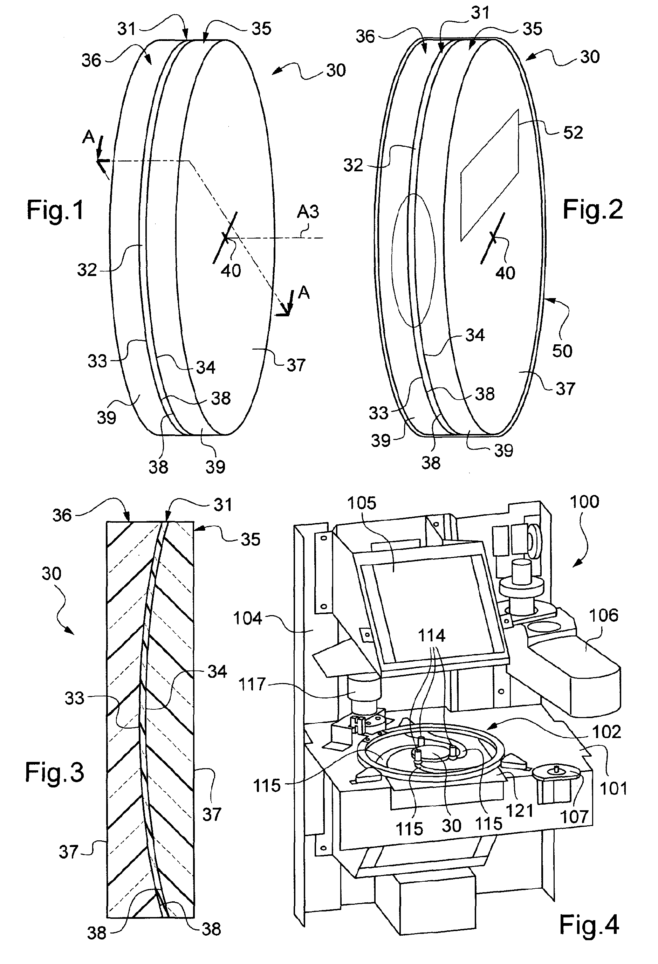

Sur la figure 1, on a représenté un produit 30 à usage optique tel qu'il se présente initialement à l'opticien lorsqu'il le reçoit du fabricant.

Ce produit 30 comporte trois couches superposées scindables, dont une couche optique 31 appelée lentille souple, et deux couches de conditionnement 35 adaptées à conditionner cette lentille souple 31. Tel que représenté sur la figure 1,ces deux couches de conditionnement 35, 36 prennent la lentille souple 31 en sandwich pour la protéger efficacement en cas de manipulation indélicate lors de son stockage ou de son expédition.

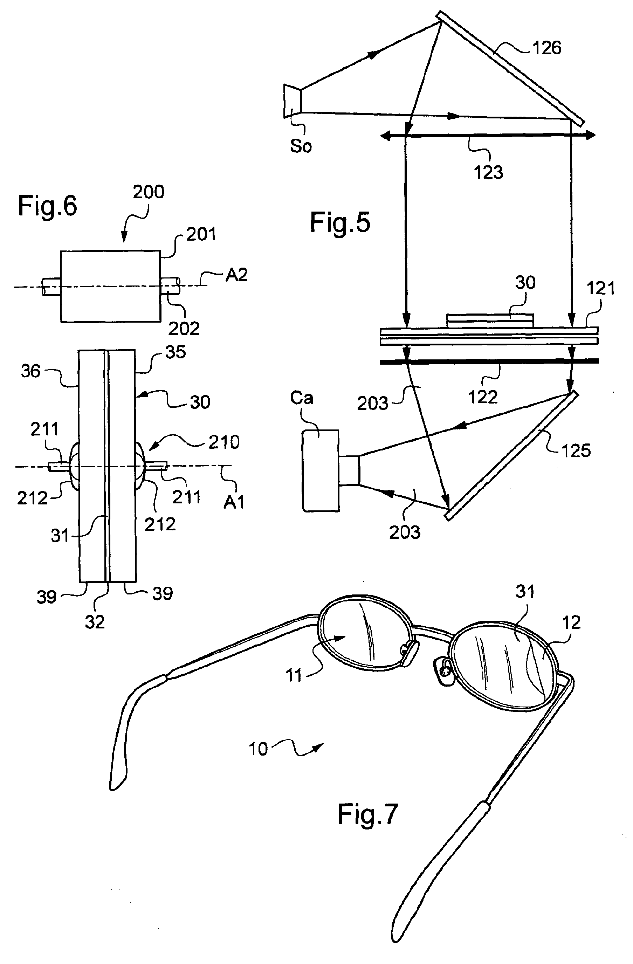

Ces couches superposées 31, 35, 36 sont scindables en ce sens qu'elles sont séparables manuellement les unes des autres, sans que cette scission ne risque de déchirer la lentille souple 31. Une fois les différentes couches 31, 35, 36 séparées les unes des autres, la lentille souple 31 doit pouvoir en effet être appliquée avec soin sur un verre de lunettes 12 d'une monture 11 d'une paire de lunettes 10 (figure 7), pour modifier les caractéristiques optiques de ce verre de lunettes 12.

Comme le montrent les figures 1 et 3, la lentille souple 31 présente deux faces optiques 33, 34 et une tranche 32 de contour initial circulaire.

Cette lentille souple 31 présente plus précisément un diamètre initial supérieur ou égal à 80 millimètres, de manière qu'elle peut être appliquée sur tout type de verres de lunettes 12, quelles que soient les dimensions et la cambrure du verre de lunettes considéré.

Pour pouvoir être appliquée sur ce verre de lunettes 12, la lentille souple 31 est avantageusement réalisée dans un matériau transparent et souple. Ce matériau présente une dureté préférentiellement comprise entre 70 et 95 Shore A. On peut à titre d'exemple prévoir de fabriquer la lentille souple 31 en polyuréthane thermoplastique ou en polychlorure de vinyle.

Ici, l'indice de réfraction du matériau utilisé est homogène sur toute l'étendue de la lentille souple 31. Les deux faces optiques 33, 34 de la lentille souple 31 ne sont en revanche pas planes. Elles présentent au contraire des formes de calottes sphériques ou toriques, tournées dans une même direction. Elles présentent en outre ici des rayons de courbure maximum compris entre 53 millimètres et 135 millimètres. Ces deux faces optiques 33, 34 présentent des formes différentes, si bien que l'épaisseur de la lentille souple 31 varie entre son centre et sa périphérie.

Du fait de cette variation d'épaisseur, la lentille souple 31 présente des propriétés de réfringence permettant de corriger ou de compléter les propriétés de réfringence du verre de lunettes 12.

Ces propriétés de réfringence sont généralement définies par des valeurs de puissances optiques sphérique, cylindrique et prismatique. Ici, la lentille souple 31 présente une puissance optique sphérique non nulle, et des puissances optiques cylindrique et prismatique nulles.

En variante, on pourra prévoir que la forme et les propriétés de réfringence de la lentille souple 31 soient différentes. Cette lentille souple 31 pourra par exemple constituer une lentille de Fresnel ou diffractive. Une telle lentille souple est par exemple décrite en détail dans le document FR 2 924 819.

La lentille souple 31 est donc un élément optique qui présente un pouvoir de réfraction optique susceptible de pallier en partie au moins les insuffisances visuelles du porteur du verre de lunettes sur lequel la lentille souple est destinée à être appliquée.

Encore en variante, la lentille souple 31 pourra présenter une fonction supplémentaire, telle que par exemple conférer une teinte spécifique au verre de lunettes 12 (fonction anti-UV) ou modifier les caractéristiques mécaniques du verre de lunettes 12 à la manière d'un traitement de surface.

La face optique 33 convexe de la lentille souple 31 est destinée à s'appliquer sur la face optique concave du verre de lunettes 12 correspondant. Elle est à cet effet lisse ou recouverte d'un revêtement adhésif dont est dépourvue sa face optique 34 concave. En variante, on pourra au contraire prévoir que ce soit la face optique 34 concave de la lentille souple 31 qui soit destinée à s'appliquer sur le verre de lunettes 12, auquel cas seule cette face optique 34 concave sera recouverte d'un revêtement adhésif. Encore en variante, on pourra prévoir d'appliquer ce revêtement adhésif non pas sur la lentille souple 31, mais directement sur le verre de lunettes 12, auquel cas aucune des deux faces optiques 33, 34 de la lentille souple 31 ne sera recouverte d'un revêtement adhésif.

Les couches de conditionnement 35, 36 forment des couches de protection de la lentille souple 31. Ces couches de conditionnement 35, 36 sont donc optiquement inactives et sont destinées à être mises au rebut après scission du produit 30.

Comme le montrent également les figures 1 et 3, les deux couches de conditionnement 35, 36 présentent chacune une tranche 39 cylindrique de révolution autour d'un même axe A3, une face de support 37 plane tournée à l'opposée de la lentille souple 31, et une face de fixation 38 qui s'applique contre la face optique 33, 34 correspondante de la lentille souple 31. Cette face de fixation 38 présent à cet effet une forme de calotte sphérique de rayon de courbure sensiblement égal au rayon de courbure de la face optique 33, 34 correspondante de la lentille souple 31.

Les couches de conditionnement 35, 36 présentent des diamètres extérieurs tels que chaque couche de conditionnement 35, 36 recouvre au moins les deux tiers de la face optique 33, 34 correspondante de la lentille souple 31.

Telles que représentées sur la figure 1, les couches de conditionnement 35, 36 présentent des diamètres extérieurs égaux au diamètre extérieur de la lentille souple 31, de sorte que les tranches 32, 39 des couches de conditionnement et de la lentille souple 31 s'étendent dans le prolongement les unes des autres.

On pourra en variante prévoir que les couches de conditionnement 35, 36 présentent des diamètres extérieurs supérieurs au diamètre extérieur de la lentille souple 31, de manière que la tranche 32 de la lentille souple 31 s'étende en retrait des tranches 39 des couches de conditionnement 35, 36 afin d'être mieux protégée.

Selon une autre variante non représentée, on pourra prévoir que l'une et/ou l'autre des deux couches de conditionnement 35, 36 présente sur sa face de fixation 38, une nervure qui court le long du pourtour de cette face et qui recouvre ainsi intégralement la tranche 32 de la lentille souple 31 pour la protéger efficacement.

L'une au moins des deux couches de conditionnement 35, 36 présente une rigidité supérieure à celle de la lentille souple 31, propre à permettre au produit 30 d'être usiné sans fléchir au moyen d'un appareil de détourage de verres de lunettes traditionnel, non modifié de quelque manière que ce soit.

On définit ici la rigidité R d'une couche (lentille souple ou couche de conditionnement) comme une fonction linéaire croissante du produit de son module d'Young E par le moment d'inertie de sa section axiale.

Ici, par simplification, la rigidité R de chaque couche est définie comme étant égale, à un facteur constant près, au produit du module d'Young E de la couche considérée par une épaisseur caractéristique de cette couche.

L'épaisseur caractéristique ici choisie pour calculer cette rigidité R est l'épaisseur minimum de la couche concernée. En variante, on pourrait bien sûr calculer cette rigidité autrement, en considérant par exemple l'épaisseur moyenne ou l'épaisseur maximum de la couche concernée.

La formule mathématique de calcul de la rigidité R d'une couche est donc la suivante :

$$R = k.E.e,$$

avec :

- k une constante strictement positive identique pour chaque couche,
- E le module d'Young du matériau de la couche considérée,
- e l'épaisseur minimum de cette couche.

Dans le cas où la couche concernée n'est pas réalisée d'une seule matière, mais est au contraire composée de plusieurs sous-couches présentant chacune un module d'Young propre, le module d'Young E de la couche est considéré égal à la somme des modules d'Young Ei des sous-couches, pondérés par le rapport de leurs épaisseurs moyennes ei sur l'épaisseur moyenne e de la couche, selon la formule suivante :

$$E = Somme\ (ei/e\ .\ Ei).$$

Ici, chacune des deux couches de conditionnement 35, 36 présente une rigidité supérieure à celle de la lentille souple 31. En variante, on pourrait aussi prévoir qu'une seule de ces deux couches de conditionnement 35, 36 présente une rigidité supérieure à celle de la lentille souple 31, l'autre couche de conditionnement étant formée par un simple film conçu pour protéger la lentille souple des risques de rayures.

Ici, la lentille souple 31 est réalisée dans un matériau présentant un module d'Young E1 inférieur à 1000 Mpa.

Elle présente en outre une épaisseur e1 qui est en tout point supérieure ou égale à 0,2 millimètre et inférieure ou égale à 3 millimètres.

Les deux couches de conditionnement 35, 36 sont quant à elles réalisées dans un matériau présentant un module d'Young E2, E3 supérieur à 800 Mpa.

Les deux couches de conditionnement 35, 36 présentent en outre chacune une épaisseur e1, e3 qui est en moyenne environ égale à 2 millimètres, et qui est en tout point supérieure ou égale à 1 millimètre et inférieure ou égale à 5 millimètres. Ces épaisseurs et modules d'Young sont en particulier choisis de telle sorte que chaque couche de conditionnement 35, 36 présente une rigidité supérieure à celle de la lentille souple 31.

Le matériau choisi pour réaliser ces deux couches de conditionnement 35, 36 est du verre minéral ou organique (polycarbonate). De cette manière, le produit 30 peut être facilement usiné sur un appareil de détourage traditionnel, lors d'un cycle d'ébauche et de finition classiquement programmé sur un tel appareil.

Les deux couches de conditionnement 35, 36 sont agencées pour rester fixes par rapport à la lentille souple 31, quelle que soit la manière selon laquelle le produit 30 est manipulé lors de son expédition.

La face optique 33 convexe de la lentille souple 31 est à cet effet collée sur la face de fixation 38 de la couche de conditionnement 36 correspondante, grâce au revêtement adhésif qui la recouvre.

La face optique 34 concave de la lentille souple 31 est quant à elle fixée sur la face de fixation 38 de l'autre des couches de conditionnement 35 grâce aux propriétés d'adhésion intrinsèque du matériau qui la constitue. Une fine pellicule d'eau peut en outre être interposée entre la face optique 34 concave de la lentille souple 31 et la face de fixation 38 de la couche de conditionnement 35, de manière à initier le contact entre ces deux faces 34, 38.

On pourra par ailleurs prévoir d'interposer une pastille adhésive double-face (non représentée) entre l'une des faces optiques de la lentille souple et la face de fixation de la couche de conditionnement correspondante, en particulier dans la variante de réalisation du produit dans laquelle ce dernier ne comporte qu'une unique couche de conditionnement.

On pourra également prévoir d'interposer une couche de traitement entre l'une et/ou l'autre des faces optiques de la lentille souple et la face de fixation de la couche de conditionnement correspondante. A titre d'exemple, une telle couche de traitement pourrait par exemple être constituée par une couche anti-UV permettant de filtrer les rayons du soleil.

Avantageusement, l'une des deux couches de conditionnement 35, 36 présente au moins une marque de centrage 40 caractéristique de la position du référentiel optique de la couche optique 31. Cette couche de conditionnement peut aussi présenter au moins une marque d'orientation (généralement appelé « marque d'axage » ou « axe »), telle qu'un trait, caractéristique de l'orientation du référentiel optique de ladite couche optique 31 par rapport à l'horizon lorsque le verre de lunettes 12 est disposé sur sa monture devant l'oeil d'un porteur en posture naturelle.

On pourra également prévoir de ménager sur cette couche optique un marquage de graduation du genre rapporteur facilitant les contrôles ultérieurs par l'opticien.

Cette marque de centrage 40 est ici constituée par une croix imprimée au centre de la face de support 37 de cette couche de conditionnement 35. Elle pourrait en variante y être gravée. Elle indique ici la position du centre optique de la lentille souple 31.

Cette marque de centrage pourrait bien sûr présenter une forme différente. Elle pourrait par exemple présenter un trait supplémentaire, indiquant l'orientation de l'axe de cylindre de la lentille souple si cette dernière présentait une puissance optique cylindrique non nulle.

Les deux couches de conditionnement 35, 36 sont par ailleurs préférentiellement transparentes de manière que le produit 30 peut être, comme cela sera décrit plus en détail dans la suite de cet exposé, centré et bloqué sur un dispositif centreur-bloqueur classique, de la même manière qu'un verre de lunettes.

La transparence des deux couches de conditionnement 35, 36 permet par ailleurs de contrôler les puissances optiques de la lentille souple 31 à l'aide d'un frontofocomètre classique, au travers de ces deux couches de conditionnement 35, 36.

Comme cela apparaît sur la figure 2, le produit comporte en outre préférentiellement un film de protection 50 qui forme un étui s'étendant autour d'au moins une partie des deux couches de conditionnement 35, 36 pour les maintenir fixement en appui contre la lentille souple 31.

Cet étui 50 est ici réalisé dans une matière plastique thermorétractable transparente. Il présente initialement une forme de tube de faible épaisseur, dans lequel sont insérés les deux couches de conditionnement 35, 36 superposées à la lentille souple 31. Après chauffage, cet étui se rétracte alors sur les couches de conditionnement 35, 36 de manière que le produit 30 forme un ensemble monobloc résistant aux chocs.

Cet étui 50 pourra bien sûr être réalisé autrement, de préférence dans une matière transparente pour ne pas gêner les mesures des puissances optiques de la lentille souple 31 à l'aide du frontofocomètre.

Cet étui 50 présente ici une zone de marquage commercial 52, décalée par rapport à la marque de centrage 40. Les valeurs des puissances optiques de la lentille souple 31 et l'adresse de destination à laquelle est adressé le produit 30 sont imprimées dans cette zone de marquage commercial 52. L'étui forme ainsi l'emballage du produit 30, au bénéfice de la réduction des coûts et du volume de déchets générés.

En variante, on pourra également prévoir d'imprimer ces informations directement sur l'une des couches due conditionnement 35, 36, de telle manière qu'elles soient visibles au travers de l'étui transparent.

La mise en place de la lentille souple 31 sur le verre de lunettes 12 de la monture de lunettes 11 de la paire de lunettes 10 (figure 7) est réalisée en trois étapes.

Au cours d'une première étape, la forme du contour du verre de lunettes 12 est acquise. Cette étape peut par exemple être mise en oeuvre au moyen d'un appareil photo numérique, en prenant un cliché sur lequel apparaissent, d'une part, la paire de lunettes 10 vue de face, et, d'autre part, un indicateur pour indiquer l'échelle de la photo et donc la taille réelle du verre de lunettes 12. Ce cliché est alors transmis à un dispositif de traitement informatique qui en déduit la géométrie du contour du verre de lunettes 12 dans le plan du cliché.

Au cours d'une seconde étape, le produit 30 est centré et bloqué par un dispositif centreur-bloqueur classique. Un tel dispositif est par exemple représenté sur la figure 4.

Ce dispositif centreur-bloqueur 100 comporte ici un bâti 104, un pupitre de travail 101 sur lequel est disposé un mécanisme de centrage 102, et un écran de visualisation 105 fixé sur le bâti 104.

Le mécanisme de centrage 102 comporte un jeu de trois mors 114 à serrage concentrique portés chacun par un bras 115 pivotant, commandé par un moteur 117 pour permettre le rapprochement des trois mors 114. L'ensemble formé par les trois bras 115 et les trois mors 114 est disposé au-dessus d'une plaque support 121 adaptée à laisser passer la lumière.

Le dispositif centreur-bloqueur 100 comporte par ailleurs un bras de positionnement 106 automatisé, relié au bâti 104 et adapté à prendre à l'aide d'une pince un organe de blocage disposé sur un réceptacle 107 et à venir le déposer à un emplacement déterminé par calcul sur le produit 30.

Dans cette optique, le dispositif centreur-bloqueur 100 est adapté à détecter la position de la marque de centrage 40 du produit 30. Comme le montre schématiquement la figure 5, il comprend à cet effet, de part et d'autre de la plaque support 121, d'une part, des moyens d'éclairement So, 126, 123 pour éclairer la plaque support 121, et, d'autre part, des moyens d'acquisition et d'analyse 122, 125, Ca de la lumière transmise au travers de la plaque support 121.

Sur l'exemple représenté, les moyens d'éclairement comprennent une source de lumière So, un système de renvoi de la lumière comportant un miroir 126 incliné à 45° et une lentille de collimation 123 adaptée à former un flux lumineux à rayons parallèles en direction de la plaque support 121. Les moyens d'acquisition et d'analyse comprennent ici une plaque dépolie 122 formant écran, un miroir 125 incline à 45°, une caméra numérique Ca et des moyens de traitement d'image adaptés à traiter le signal obtenu en sortie de la caméra numérique Ca et celui obtenu en sortie de l'appareil photo numérique.

En positionnant le produit 30 sur la plaque support 121, entre les mors 114, les moyens d'acquisition et d'analyse sont alors adaptés à repérer la position de la marque de centrage 40 imprimée sur le produit 30 pour le centrer.

Cette opération de centrage consiste en l'espèce à positionner et à orienter le contour acquis du verre de lunettes 12 dans le référentiel optique de la lentille souple 31, de manière à déterminer suivant quel contour il faudra détourer le produit 30.

Cette opération de centrage est alors suivie d'une étape de blocage du produit 30, qui consiste à positionner un organe de blocage sur ce produit 30. Ainsi, lorsque le produit 30 muni de son organe de blocage est transféré sur un appareil de détourage, ce dernier peut connaître la position du référentiel optique de la lentille souple 31, et donc la position du contour selon lequel le produit 30 devra être détouré.

Cette opération de blocage est réalisée par le dispositif centreur-bloqueur 100, au moyen de son bras de positionnement 106.

Au cours de cette étape, le bras de positionnement 106 positionne un organe de blocage sur la face de support 37 de l'une des couches de conditionnement 35, 36 du produit 30, en un point de blocage donné déduit de la position de la marque de centrage 40. Le produit est ensuite extrait du dispositif centreur-bloqueur 100.

La troisième étape est une étape de détourage du produit 30, pour ramener son contour à la forme souhaité, c'est-à-dire à la forme du contour du verre de lunettes 12. Elle est réalisée sur un appareil de détourage classique. Un tel appareil de détourage, bien connu de l'Homme du métier, est par exemple représenté schématiquement sur la figure 6.

Cet appareil de détourage 200 comprend ici des moyens de support 210 de lentilles, adaptés à bloquer le produit 30. Ces moyens de support 210 comportent ici deux arbres 211 de maintien et d'entraînement en rotation du produit 30 autour d'un axe de blocage A1. Cet appareil de détourage 200 comprend en outre des moyens d'usinage 201 de lentilles qui sont, de ce fait, conformés pour usiner la tranche du produit 30. Ces moyens d'usinage 201 comprennent ici une meule cylindrique 201 montée sur un arbre 202 rotatif autour d'un axe d'usinage A2 parallèle à l'axe de blocage A1.

La meule cylindrique 201 et/ou les moyens de support 210 sont pourvus d'une mobilité radiale permettant de modifier l'écartement entre l'axe d'usinage A2 et l'axe de blocage A1 pour ramener la tranche du produit 30 à la forme souhaitée.

L'appareil de détourage 200 comporte en outre un dispositif électronique et/ou informatique (non représenté) qui est pourvu, d'une part, de moyens de communication avec le dispositif centreur-bloqueur 100, et, d'autre part, de moyens de pilotage de ladite mobilité radiale. Ce dispositif électronique et/ou informatique permet en particulier de piloter, pour chaque position angulaire du produit 30 autour de l'axe de blocage A1, l'écartement radial entre la tranche de la meule cylindrique 201 et l'axe de blocage A1.

Pour usiner le produit 30, ce dernier est tout d'abord bloqué entre les extrémités 212 des arbres 211 des moyens de support 210. S'il comporte un étui 50, il n'est pas nécessaire de retirer ce dernier avant de bloquer le produit 30.

Un cycle d'usinage classique est alors mis en route. Au cours de ce cycle, le dispositif électronique et/ou informatique acquiert, grâce à ses moyens de communication avec le dispositif centreur-bloqueur 100, les paramètres d'usinage du produit 30, de manière à piloter la mobilité radiale des arbres 211 par rapport à la meule 201 pour détourer le produit 30 à la forme souhaitée.

Une fois cette opération achevée, le produit 30 est extrait des moyens de du support 210. Il est ensuite manuellement scindé en trois parties. L'étui 50 et les deux couches de conditionnement 35, 36 sont mises au rebut. La lentille souple 31 est en revanche appliquée sur la face arrière du verre de lunettes 12 de telle manière que son contour se confonde avec celui du verre de lunettes 12. En variante, la lentille souple 31 pourrait au contraire être appliquée sur la face avant du verre de lunettes 12.

**Revendications**

1. Produit (30) à usage optique, comportant au moins trois couches superposées scindables, dont :

    - une couche optique (31) transparente et souple, qui comporte deux faces optiques (33, 34) opposées dont l'une est adaptée à être appliquée sur un verre de lunettes et qui présente une épaisseur caractéristique (e1), une épaisseur en tout point comprise entre 0,2 et 3 millimètres et un module d'Young (E1) inférieur à 1000 MPa,
- une première couche de conditionnement (35) de ladite couche optique (31), qui est fixée sur l'une des deux faces optiques (33, 34) de la couche optique (31) et qui présente une épaisseur caractéristique (e2), une épaisseur en tout point supérieure à 1 millimètre et un module d'Young (E2) supérieur à 800 Mpa,
- une seconde couche de conditionnement (36) de ladite couche optique (31), qui est fixée sur l'autre des deux faces optiques (33, 34) de la couche optique (31) et qui présente une épaisseur caractéristique (e3), une épaisseur en tout point supérieure à 1 millimètre et un module d'Young (E3) supérieur à 800 Mpa,

dans lequel, chaque couche (31, 35) présentant une rigidité définie par une même fonction linéaire du produit de son module d'Young par son épaisseur caractéristique, ladite première couche de conditionnement (35) présente une rigidité supérieure à la rigidité de ladite couche optique (31), propre à permettre au produit (30) d'être usiné au moyen d'un appareil de détourage (200) de verres de lunettes, et dans lequel la couche optique (31) est détachable manuellement de chaque couche de conditionnement (35, 36) afin de pouvoir être ensuite rapportée sur un verre de lunettes.

2. Produit selon la revendication 1, dans lequel ladite seconde couche de conditionnement (36) présente une rigidité supérieure à la rigidité de ladite couche optique (31).

3. Produit selon l'une des revendications 1 et 2, dans lequel ladite première couche de conditionnement (35) présente au moins une marque de centrage (40) caractéristique de la position du référentiel optique de ladite couche optique (31).

4. Produit selon l'une des revendications 1 à 3, dans lequel ladite première couche de conditionnement (35) présente au moins une marque d'orientation caractéristique de l'orientation du référentiel optique de ladite couche optique (31).

5. Produit selon l'une des revendications 1 à 4, dans lequel chaque couche de conditionnement (35, 36) est transparente.

6. Produit selon l'une des revendications 1 à 5, dans lequel ladite couche optique (31) présente une épaisseur variable.

7. Produit selon l'une des revendications 1 à 6, dans lequel l'une des deux faces optiques (33, 34) de ladite couche optique (31) présente une forme de calotte sphérique ou torique.

8. Produit selon l'une des revendications 1 à 7, dans lequel ladite première couche de conditionnement (35) présente des dimensions supérieures à celles de ladite couche optique (31), et dans lequel ladite couche optique (31) présente une tranche (32) recouverte par ladite première couche de conditionnement (35).

9. Produit selon l'une des revendications 1 à 7, dans lequel chaque couche de conditionnement (35, 36) présente des dimensions égales à celles de ladite couche optique (31), de telle sorte que les tranches des couches optique et de conditionnement s'étendent dans le prolongement les unes des autres.

10. Produit selon l'une des revendications 1 à 9, dans lequel chaque couche de conditionnement (35, 36) présente une tranche (39) cylindrique de révolution et une face de support (37) plane, tournée à l'opposée de ladite couche optique (31).

11. Produit selon l'une des revendications 1 à 10, comportant un film de protection (50) qui s'étend autour d'une partie au moins desdites couches superposées (21, 35, 36) pour les maintenir fixement les unes par rapport aux autres.

12. Produit selon la revendication 11, dans lequel ledit film de protection (50) présente un marquage commercial (52).

13. Procédé de montage d'une couche optique (31) d'un produit (30) selon l'une des revendications 1 à 12 sur un verre de lunettes cible, au moyen d'un appareil de détourage (200) de verres de lunettes équipé d'un support (210) de verres de lunettes et d'un outil de détourage (201) de verres de lunettes, comportant les étapes consistant à :

- bloquer le produit (30) sur ledit support (210),
- détourer ladite couche optique (31) et lesdites couches de conditionnement (35, 36) du produit (30) au moyen dudit outil de détourage (201),
- extraire le produit (30) du support (210),
- scinder le produit (30) de manière à détacher ladite couche optique (31) desdites couches de conditionnement (35, 36), et
- appliquer ladite couche optique (31) sur le verre de lunettes cible.

14. Procédé de montage selon la revendication 13, comportant les étapes préalables :

- d'acquisition de la position d'une marque de centrage (40) située sur la première couche de conditionnement (35),
- de blocage d'un pion de centrage sur le produit (30), en une position déduite de la position acquise de ladite marque de centrage (40).

**Patentansprüche**

1. Produkt (30) zur optischen Verwendung, das mindestens drei zerlegbare übereinander angeordnete Schichten aufweist, darunter:

    - eine biegsame und transparente optische Schicht (31), die zwei gegenüberliegende optische Seiten (33, 34) aufweist, von denen eine geeignet ist, auf ein Brillenglas aufgelegt zu werden, und die eine charakteristische Dicke (e1), eine Dicke an jedem Punkt zwischen 0,2 und 3 Millimeter und einen Elastizitätsmodul (E1) von weniger als 1000 MPa aufweist,
    - eine erste Umhüllungsschicht (35) der optischen Schicht (31), die an einer der zwei optischen Seiten (33, 34) der optischen Schicht (31) befestigt ist, und die eine charakteristische Dicke (e2), eine Dicke an jedem Punkt größer als 1 Millimeter und einen Elastizitätsmodul (E2) von mehr als 800 MPa aufweist,
    - eine zweite Umhüllungsschicht (36) der optischen Schicht (31), die an der anderen der zwei optischen Seiten (33, 34) der optischen Schicht (31) befestigt ist und die eine charakteristische Dicke (e3), eine Dicke an jedem Punkt größer als 1 Millimeter und einen Elastizitätsmodul (E3) von mehr als 800 MPa aufweist,

    wobei, da jede Schicht (31, 35) eine Steifheit aufweist, die durch die gleiche lineare Funktion des Produkts aus ihrem Elastizitätsmodul und ihrer charakteristischen Dicke definiert wird, die erste Umhüllungsschicht (35) eine größere Steifheit aufweist als die Steifheit der optischen Schicht (31), was es dem Produkt (30) ermöglicht, mittels eines Kantenbearbeitungsgeräts (200) für Brillengläser maschinell bearbeitet zu werden, und wobei die optische Schicht (31) manuell von jeder Umhüllungsschicht (35, 36) gelöst werden kann, um anschließend auf ein Brillenglas aufgebracht zu werden.

2. Produkt nach Anspruch 1, wobei die zweite Umhüllungsschicht (36) eine größere Steifheit aufweist als die Steifheit der optischen Schicht (31).

3. Produkt nach einem der Ansprüche 1 und 2, wobei die erste Umhüllungsschicht (35) mindestens eine Zentriermarke (40) aufweist, die für die Stellung des optischen Bezugssystems der optischen Schicht (31) charakteristisch ist.

4. Produkt nach einem der Ansprüche 1 bis 3, wobei die erste Umhüllungsschicht (35) mindestens eine charakteristische Ausrichtungsmarke der Ausrichtung des optischen Bezugssystems der optischen Schicht (31) aufweist.

5. Produkt nach einem der Ansprüche 1 bis 4, wobei jede Umhüllungsschicht (35, 36) transparent ist.

6. Produkt nach einem der Ansprüche 1 bis 5, wobei die optische Schicht (31) eine variable Dicke aufweist.

7. Produkt nach einem der Ansprüche 1 bis 6, wobei eine der zwei optischen Seiten (33, 34) der optischen Schicht (31) die Form einer Kugelkalotte oder torischen Kalotte aufweist.

8. Produkt nach einem der Ansprüche 1 bis 7, wobei die erste Umhüllungsschicht (35) größere Abmessungen aufweist als diejenigen der optischen Schicht (31), und wobei die optische Schicht (31) eine Schmalseite (32) aufweist, die von der ersten Umhüllungsschicht (35) bedeckt wird.

9. Produkt nach einem der Ansprüche 1 bis 7, wobei jede Umhüllungsschicht (35, 36) gleiche Abmessungen wie diejenigen der optischen Schicht (31) aufweist, so dass die Schmalseiten der optischen Schicht und der Umhüllungsschichten sich in der gegenseitigen Verlängerung erstrecken.

10. Produkt nach einem der Ansprüche 1 bis 9, wobei jede Umhüllungsschicht (35, 36) eine drehsymmetrische zylindrische Schmalseite (39) und eine ebene Trägerseite (37) aufweist, die der optischen Schicht (31) entgegengesetzt ist.

11. Produkt nach einem der Ansprüche 1 bis 10, das eine Schutzfolie (50) aufweist, die sich um mindestens einen Teil der übereinander angeordneten Schichten (21, 35, 36) erstreckt, um sie zueinander fest zu halten.

12. Produkt nach Anspruch 11, wobei die Schutzfolie (50) eine kommerzielle Beschriftung (52) aufweist.

13. Verfahren zur Montage einer optischen Schicht (31) eines Produkts (30) nach einem der Ansprüche 1 bis 12 auf ein Ziel-Brillenglas mittels eines Kantenbearbeitungsgeräts (200) von Brillengläsern, das mit einem Träger (210) von Brillengläsern und mit einem Kantenbearbeitungswerkzeug (201) von Brillengläsern ausgestattet ist, das die Schritte aufweist, die darin bestehen:

- das Produkt (30) auf dem Träger (210) zu blockieren,
- die Kanten der optischen Schicht (31) und der Umhüllungsschichten (35, 36) des Produkts (30) mittels des Kantenbearbeitungswerkzeugs (201) zu bearbeiten,
- das Produkt (30) vom Träger (210) zu entnehmen,
- das Produkt (30) zu zerlegen, um die optische Schicht (31) von den Umhüllungsschichten (35, 36) zu lösen, und
- die optische Schicht (31) auf das Ziel-Brillenglas aufzulegen.

14. Montageverfahren nach Anspruch 13, das die vorhergehenden Schritte aufweist:

- der Erfassung der Stellung einer Zentriermarke (40), die sich auf der ersten Umhüllungsschicht (35) befindet,
- des Blockierens eines Zentrierstifts auf dem Produkt (30) in einer Stellung, die von der erfassten Stellung der Zentriermarke (40) abgeleitet wird.

**Claims**

1. A product (30) for optical use, the product comprising at least three splittable superposed layers, namely:

· a transparent and flexible optical layer (31) that has two opposite optical faces (33, 34), one of which is adapted to be applied to an eyeglass lens, and that presents a characteristic thickness (e1), a thickness at any point of the layer comprised between 0.2 and 3 mm and a Young's modulus (E1) that is less than 1000 MPa;
· a first packaging layer (35) for packaging said optical layer (31), which first packaging layer (35) is fastened to one of the two optical faces (33, 34) of the optical layer (31) and presents a characteristic thickness (e2), a thickness at any point of the layer greater than 1 mm, and a Young's modulus (E2) greater than 800 MPa; and
· a second packaging layer (36) for packaging said optical layer (31), which second packaging layer (36) is fastened to the other optical face (33, 34) of the optical layer (31) and presents a characteristic thickness (e3), a thickness at any point of the layer greater than 1 mm, and a Young's modulus (E3) greater than 800 MPa;

wherein, each layer (31, 34, 35) presents a stiffness defined by a same linear function of the product of its Young's modulus multiplied by its characteristic thickness, and said first packaging layer (35) presents stiffness that is greater than the stiffness of said optical layer (31) and that is suitable for enabling the product (30) to be machined by means of an eyeglass lens shaper appliance (200), and wherein the optical layer (31) is manually detachable from each packaging layer (35, 36) to enable it subsequently to be fitted on an eyeglass lens.

2. A product according to claim 1, wherein said second packaging layer (36) presents stiffness greater than the stiffness of said optical layer (31).

3. A product according to claim 1 or 2, wherein said first packaging layer (35) presents at least one centering mark (40) characteristic of the position of the optical frame of reference of said optical layer (31).

4. A product according to one of claims 1 to 3, wherein said first packaging layer (35) presents at least one orientation mark characteristic of the orientation of the optical frame of reference of said optical layer (31).

5. A product according to one of claims 1 to 4, wherein each packaging layer (35, 36) is transparent.

6. A product according to one of claims 1 to 5, wherein said optical layer (31) presents varying thickness.

7. A product according to one of claims 1 to 6, wherein one of the two optical faces (33, 34) of said optical layer (31) presents the shape of a spherical or toroidal cap.

8. A product according to one of claims 1 to 7, wherein said first packaging layer (35) presents dimensions that are greater than those of said optical layer (31), and wherein said optical layer (31) presents an edge face (32) covered by said first packaging layer (35).

9. A product according to one of claims 1 to 7, wherein each packaging layer (35, 36) presents dimensions equal to those of said optical layer (31), in such a manner that the edge faces of the optical and packaging layers run on one from another.

10. A product according to one of claims 1 to 9, wherein each packaging layer (35, 36) presents a circularly cylindrical edge face (39) and a plane support face (37) that faces away from said optical layer (31).

11. A product according to one of claims 1 to 10, including a protective film (50) that extends around at least a portion of said superposed layers (31, 35, 36) for holding them securely relative to one another.

12. A product according to claim 11, wherein said protective film (50) carries commercial marking (52).

13. A mounting method for mounting an optical layer (31) of a product (30) according to one of claims 1 to 12 on a target eyeglass lens, using an eyeglass lens shaper appliance (200) fitted with an eyeglass lens support (210) and a shaping tool (201) for shaping eyeglass lenses, the method comprising the steps consisting in:

blocking the product (30) on said support (210);
· edging the optical layer (31) and the packaging layers (35, 36) of the product (30) by means of a shaping tool (201);
· extracting the product (30) from the support (210) ;
· splitting the product (30) in order to extract said optical layer (31) from the packaging layers (35, 36) ; and
· applying said optical layer (31) on the target eyeglass lens.

14. A mounting method according to claim 13, including the prior steps of:

· acquiring the position of a centering mark (40) situated on the first packaging layer (35); and
· blocking a centering accessory on the product (30) at a position that is deduced from the acquired position of said centering mark (40).

Fig.1

Fig.2

Fig.3

Fig.4

Fig.6

200

201

A2

202

Fig.5

126

So

123

30

121

35

36

30

211

210

212

211

212

A1

31

125

Ca

203

122

203

39

39

32

31

12

11

10

Fig.7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 7036929 B
- US 3628854 A
- FR 2924819
- WO 2008015210 A